# EUROPÄISCHE PATENTSCHRIFT

(11) **EP 2 104 850 B1**
(45) Veröffentlichungstag und Bekanntmachung des Hinweises auf die Patenterteilung: **16.04.2014**
(21) Anmeldenummer: 07847593.6
(22) Anmeldetag: 30.11.2007
(51) Int. Cl.: G01N 27/28, G01N 27/416

(54) **WECHSELARMATUR**
INTERCHANGEABLE FITTING
ÉLÉMENT DE ROBINETTERIE D'ALTERNANCE

(30) Priorität: 21.12.2006 DE 102006061815
(43) Veröffentlichungstag der Anmeldung: 30.09.2009
(73) Patentinhaber: Endress+Hauser Conducta Gesellschaft für Mess- und Regeltechnik mbH & Co. KG, 70839 Gerlingen (DE)
(72) Erfinder: LOHMANN, Martin, 70839 Gerlingen (DE); SCHLERETH, Rainer, 41469 Neuss (DE)
(74) Vertreter: Andres, Angelika Maria
(86) Internationale Anmeldenummer: PCT/EP2007/063077
(87) Internationale Veröffentlichungsnummer: WO 2008/077714

(56) Entgegenhaltungen:
- EP-A- 0 372 121
- EP-A- 1 077 373
- EP-A- 1 248 102
- WO-A-2004/023127
- DE-U1- 9 406 884
- DE-U1-202006 007 648
- "Memosens" EMC NEWS, [Online] November 2004 (2004-11), Seiten 1-1, XP002471942 Gefunden im Internet: URL:http://www.emc.co.nz/pdf/Articles/ehcm emosens0411.pdf> [gefunden am 2008-03-07]
- ENDRESS UND HAUSER: "CLEANFIT P CPA473" ENDRESS UND HAUSER TECHNISCHE INFORMATION, Februar 2005 (2005-02), Seiten 1-16, XP002471943

## Beschreibung

Die Erfindung betrifft eine Wechselarmatur mit einem Armaturengehäuse und mit einer in dem Armaturengehäuse über eine Hubbewegung linear zwischen einer ersten Position und einer zweiten Position geführten rohrförmigen Halterung für einen Sensor, wobei der Sensor eine physikalische und/oder chemische Prozessgröße in einem Prozess bestimmt. Bei den Sensoren kann es sich beispielsweise um pH-Elektroden, amperometrische Sensoren, Gassensoren, Leitfähigkeitssensoren oder dgl. handeln.

Wechselarmaturen sind in der Analysemesstechnik weit verbreitet. Sie dienen dazu, Sensoren ohne Prozessunterbrechung selbst bei hohen Prozess-drücken aus dem Prozess zu entnehmen und anschließend wieder in den Prozess einzuführen. Der Sensor wird hierzu automatisch oder manuell von einer Messposition in eine Wartungs- oder Serviceposition und zurück verfahren. In der Wartungsposition wird der der Sensor überprüft, kalibriert oder aber einfach nur gereinigt, was je nach Anwendungsfall für die Güte der Messungen von großer Bedeutung ist. In der Messposition wird die zu bestimmende oder zu überwachende Prozessgröße ermittelt.

Als Prozessabschluss zum Medium sind zwei unterschiedliche Lösungen im Einsatz: Bei einer ersten Ausführungsform wird ein Kugelhahn bzw. ein Kükenhahn verwendet, der über eine rotierende Walze die Öffnung, durch die der Sensor in den Prozess hinein- und aus dem Prozess herausbewegt wird, zum Prozess hin öffnet oder schließt. Bei einer zweiten Ausführungsform kommt ein Verschlusszapfen zum Einsatz. Dieser Verschlusszapfen ist integraler Bestandteil der Wechselarmatur.

Kugelhahnarmaturen werden bevorzugt in Medien mit Feststoffanteil einge-setzt. Unter Feststoffen werden Fasern, aber auch festhaftende Anbackungen von Kalk und ähnlichen Stoffen verstanden. Der Sensor wird in Kugelhahn-armaturen getrennt vom Schließ-/Öffnungsmechanismus aus dem Prozess heraus- und in den Prozess hineingefahren. Hierzu wird der Kugelhahn geschlossen bzw. geöffnet. Zwecks Reinigung des Sensors wird der Sensor in der Wartungsposition in eine vom Prozess abgetrennte Spülkammer eingebracht.

Wechselarmaturen werden von der Anmelderin in unterschiedlichen Ausgestaltungen unter der Bezeichnung 'CleanFit' angeboten und vertrieben. Armaturen mit Verschlußzapfen werden beispielsweise unter den Bezeichnungen CleanFit S, CPA 471, CPA 472, CPA 473 und CPA 474. geführt. Bei diesen Wechselarmaturen ist die Halterung für den Sensor selbst als Dichtelement ausgestaltet. Der vordere Teil der Halterung ist als Zapfen ausgebildet, der bereits während des Zurückfahrens zum Prozessanschluss hin radial abdichtet. Der Aufbau des Dichtungssystems der Armaturen CPA 471 und CPA 472 gewährleistet dabei eine perfekte Trennung zwischen der Spülkammer und damit der "Außenwelt", und dem Prozess - und zwar in jeder Stellung der Halterung.

Es versteht sich von selbst, dass diese Trennung nur wirksam ist, wenn die Dichtringe nicht beschädigt sind. Eine konsequente Kontrolle der Dichtringe ist daher unbedingt zu empfehlen. Allerdings bedeutet Kontrolle bei vielen Armaturen eine Demontage der kompletten Wechselarmatur und ist somit entsprechend zeitaufwändig. Auch ist darauf zu achten, dass die Kontrolle bzw. ein Austausch der Dichtringe nur durch geschultes Personal durchge-führt wird, da die Wechselarmatur anschließend wieder korrekt unter den herrschenden Prozessbedingungen arbeiten muss.

Ein Austausch der Dichtringe ist in gewissen Zeitabständen zwecks Sicherstellung der Dichtfunktion notwendig, da O-Ringe, die üblicherweise aus Polymeren bestehen, nach einer gewissen Standzeit an einer Oberfläche, auf die sie angepresst werden, festkleben. Wird nun die Halterung relativ zum Armaturengehäuse bewegt, so besteht die Gefahr, dass die Oberfläche des Polymers, also des O-Rings, beschädigt wird. Dieser Effekt ist unter der Bezeichnung Slipstick-Effekt bekannt. Bei Auftreten des Effekts ist die Dichtfunktion eines O-Rings nicht mehr gewährleistet.

Aus dem Zuvorgesagten ergibt sich, dass die Anzahl der Hubbewegungen einen relativ großen Einfluss auf die Funktion der Dichtringe und damit auf die Dichtigkeit der Wechselarmatur hat. Weitere Einflussgrößen hinsichtlich des Verschleißes der Dichtringe sind die Temperatur und der Druck. Bislang wurden diese Größen bei der Festlegung der Wartungsintervalle nicht berücksichtigt. Vielmehr wurden im Hinblick auf den Abstand von zwei aufeinanderfolgender Wartungsintervalle pauschale Erfahrungswerte verwendet.

Der Erfindung liegt die Aufgabe zugrunde, eine intelligente Wechselarmatur anzugeben, die in der Lage ist, eine Selbstdiagnose durchzuführen.

Die Aufgabe wird durch eine Wechselarmatur mit den Merkmalen des Anspruchs 1 gelöst. Es ist eine Vorartelektronik vorgesehen, die Information über zumindest eine weitere Zustandsvariable der Wechsel-armatur, des Prozesses und/oder des Sensors als Istwert bzw. als Istwerte ermittelt, und dass der Vorortelektronik eine Speichereinheit zugeordnet ist, in der der ermittelte Istwert bzw. die ermittelten Istwerte abgespeichert ist / sind. Bei den Istwerten handelt es sich beispielsweise um die Anzahl der von der Wechselarmatur durchgeführten Hubbewegungen, um die Temperatur der Wechselarmatur oder im Prozess, um den Prozessdruck, um den Druck in der Druckzuleitung der Wechselarmatur, usw.

Erfindungsgemäß handelt es sich somit um eine digitalisierte Wechsel-armatur. Bevorzugt ist die Wechselarmatur darüber hinaus mit einer eindeutigen Identifizierung ausgerüstet. Hierdurch ist u.a. die wechselarmatur-spezifische Verfolgung von Servicefällen auf einfache Art und Weise möglich.

Gemäß einer vorteilhaften Weiterbildung der Wechsel-armatur ist die Vorortelektronik in einem Elektronikmodul bzw. in einer Elektronikbox angeordnet. Das Elektronikmodul bzw. die Elektronikbox ist entweder in die Wechselarmatur integriert, oder die Wechselarmatur ist nachträglich mit dem Elektronikmodul bzw. mit der Elektronikbox nachrüstbar, so dass auch die bereits im Feld montierten Wechselarmaturen mit der erfindungsgemäßen Zusatzfuktionalität ausgerüstet werden können.

Gemäß einer vorteilhaften Ausgestaltung der Wechsel-armatur ist an der Vorortelektronik zumindest eine Schnittstelle bzw. eine Steckverbindung vorgesehen, über die die Vorortelektronik mit einer entfernten Elektronik des Messumformers Information austauscht und/oder über die die Vorortelektronik mit Energie versorgt wird und/oder über die die Vorortelektronik mit einer dem Sensor zugeordneten Sensorelektronik Information und/oder Energie austauscht. Über die Schnittstelle wird z.B. die Vorortelektronik mit Energie versorgt, während die Wechselarmatur bevorzugt weiterhin pneumatisch betätigt wird. Eine entsprechende Technologie wird von der Anmelderin bereits in einem Produkt verwendet, das unter der Bezeichnung MEMOSENS erfolgrelch angeboten und vertrieben wird. Diese bekannte MEMOSENS-Technologie ist dem Offenbarungsgehalt der vorliegenden Anmeldung zuzurechnen.

Gemäß einer vorteilhaften Weiterbildung der Vorrichtung ist vorgesehen, dass die Wechselarmatur einen Sensorstecker aufweiset, wie er heute bereits an den MEMOSENS-Sensoren vorgesehen ist. Dieser Stecker verbindet - wie bereits erwähnt - den Messumformer mit der Vorortelektronik in der Wechselarmatur. Von der Vorortelektronik geht eine kontaktlose Steckerkopplung weiter zur Sensorelektronik. Somit ist die digitale Wechselarmatur auch kompatibel mit einer nicht-digitalen Wechselarmatur. Diese Ausgestaltung ist insoweit vorteilhaft, als nur eine Verbindungsleitung von dem Messumformer zur Wechselarmatur vorgesehen sein muss. Der Anschluss kann natürlich auch mit elektrischen Kontakten ausgestaltet sein.

An der Wechselarmatur ist zumindest ein Detektor vorgesehen, der eine Hubbewegung der rohr-förmigen Halterung in der Wechselarmatur detektiert; die Regel-/Auswerteeinheit stellt die Anzahl der erfolgten Hubbewegungen als Istwert bereit und/oder sie generiert eine Warnmeldung, wenn die Anzahl der Hubbewegungen eine als Sollwert vorgegebene Anzahl von Hubbewegungen erreicht oder überschreitet. Diese Warnmeldung wird dahingehend interpretiert, dass die Wechselarmatur gewartet werden muss bzw. dass die Dichtringe turnusgemäß ausgetauscht werden müssen. Die erfindungsgemäße Wechselarmatur ist somit mit Mitteln ausgestattet, die eine vorausschauende Wartung erlauben, was insbesondere heisst, dass die Wartung nur dann stattfindet, wenn sie tatsächlich erforderlich ist. Hierdurch lassen sich die Betriebskosten senken; die Funktionalität der Wechselarmatur ist zu jedem Zeitpunkt sichergestellt.

Die Vortortelektronik steht mit der Regel-/Auswerteeinheit, die im Messum-former angeordnet ist, in Verbindung. Insbesondere ist vorgesehen, dass die Wechselarmatur mit einem Sensorstecker, insbesondere mit einem kontakt-losen Sensorstecker, ausgestattet ist. Sobald die Anzahl der durchgeführten Hubbewegungen eine vorgegebene Anzahl von Hubbewegungen erreicht hat, generiert die Regel-/Auswerteeinheit eine Meldung, dass nunmehr eine vorgegebene Anzahl von Hubbewegungen erfolgt ist. Diese Meldung wird entweder auf einem Display ausgegeben oder an eine übergeordnete Leitwarte weitergeleitet. Selbstverständlich ist es auch möglich, die Vorort-elektronik bzw. das Elektronikmodul mit einem Display auszustatten. Möglich ist es natürlich auch, das Elektronikmodul bzw. die Vorortelektronik mit einem Funkmodul auszustatten, so dass der Datenaustausch drahtlos erfolgen kann. Hierdurch wird die Wechselarmatur relativ unempfindlich gegen Reinigungs-wasser und korrodierende Dämpfe.

Bevorzugt handelt es sich bei den Detektoren um zwei Endlagenschalter, die das Erreichen der ersten Position - der Messposition - und der zweiten Position - der Wartungsposition - der rohrförmigen Halterung detektieren.

Wie bereits angedeutet, haben neben den mechanischen Hubbewegungen auch weitere Zustandsgrößen in der Umgebung der Wechselarmatur Einfluss auf die Zeit zwischen zwei Wartungsintervallen. Daher ist gemäß einer vorteilhaften Weiterbildung der erfindungsgemäßen Wechselarmatur zumindest ein Temperaturfühler vorgesehen, der die Temperatur der Wechselarmatur und/oder des Prozesses ermittelt, und dass die Regel-/Auswerteeinheit den maximal gemessenen Temperaturwert und/oder die Zeitdauer, während der die Temperatur über einem vorgegebenen Schwellenwert zu liegen kommt, in der Speichereinheit abspeichert.

Wie bereits erwähnt, wird die aktuelle Anzahl der seit der letzten Wartung durchgeführten Hubbewegungen und/oder ein Hinweis zum Austausch einer Verschleisskomponente der Wechselarmatur auf einem Display angezeigt, sobald die Anzahl der Hubbewegungen einen vorgegebenen Sollwert erreicht. Es versteht sich, dass die mögliche Anzahl der Hubbewegungen stark von der Temperatur und vom Druck abhängt, so dass die Soll-Anzahl der Hubbewegungen bevorzugt in Abhängigkeit von diesen beiden Größen ermittelt wird.

Wie bereits zuvor erwähnt, erfolgt die Betätigung der Wechselarmatur manuell oder automatisch über eine pneumatische Betätigungseinheit, die die rohrförmige Halterung für den Sensor in der Wechselarmatur zwischen der ersten Position und der zweiten Position bzw. zwischen der zweiten und der ersten Position verfährt.

Im Falle einer automatischen Betätigung der Wechselarmatur ist gemäß einer vorteilhaften Ausgestaltung der erfindungsgemäßen Vorrichtung ein Timer vorgesehen, der die Zeitdauer ermittelt, die die rohrförmige Halterung zum Zurücklegen der Strecke zwischen der ersten Position und der zweiten Position benötigt. In der Speichereinheit ist die Zeit, die die Wechselarmatur zum Verfahren des Sensors von der ersten Position in die zweite Position bei korrektem Funktionieren der Wechselarmatur braucht, als Sollwert abgespeichert. Die Regel-/Auswerteeinheit generiert eine Warnmeldung, wenn die vorgegebene Zeitdauer erreicht oder überschritten wird.

Um die Genauigkeit der zuvor beschriebenen Überwachung der Wechselarmatur zwecks Selbstdiagnose zu verbessern, ist ein erster Drucksensor vorgesehen, der den Druck in einer Zuleitung der pneumatischen Betätigungseinheit detektiert. Additiv oder alternativ ist ein zweiter Drucksensor vorgesehen, der den Druck im Prozess ermittelt; die Regel-/Auswerteeinheit korrigiert die als Sollwert vorgegebene Zeit im Hinblick auf den in der Zuleitung und/oder im Prozess gemessenen Druck. Somit ist sichergestellt, dass eine Warnmeldung nur dann generiert wird, wenn eine Verschlechterung der Funktionstüchtigkeit der Wechselarmatur auftritt.

Eine vorteilhafte Ausgestaltung der erfindungsgemäßen Wechselarmatur sieht in einer Verbindungsleitung der pneumatischen Betätigungseinheit ein Druck-/Stromwandler vor, der die Vorortelektronik und/oder die Sensorelektronik mit Energie versorgt. Diese Lösung ist alternativ zu der Ausgestaltung, bei der die Vorortelektronik von dem Messumformer mit Energie versorgt wird. Mit dieser erfindungsgemäßen Ausgestaltung wird quasi eine intelligente autarke Wechselarmatur geschaffen, die auch problemlos im Ex-Bereich einsetzbar ist.

Darüber hinaus wird vorgeschlagen, dass in der Speichereinheit der Vorortelektronik Identifikationsdaten und/oder Servicemaßnahmen im Hinblick auf die Wechselarmatur gespeichert sind. Weiterhin wird vorgeschlagen, dass der Wechselarmatur zwecks eindeutiger Identifizierung ein RF/ID Tag zugeordnet ist.

Die Erfindung wird anhand der nachfolgenden Figuren näher erläutert. Es zeigt:
Fig. 1: eine teilweise im Längsschnitt gezeigte Darstellung der erfindungsgemäßen Wechselarmatur,
Fig. 2: eine perspektivische Ansicht der der erfindungsgemäßen Wechsel-armatur und
Fig. 3: eine schematische Darstellung der erfindungsgemäßen Wechselarmatur.

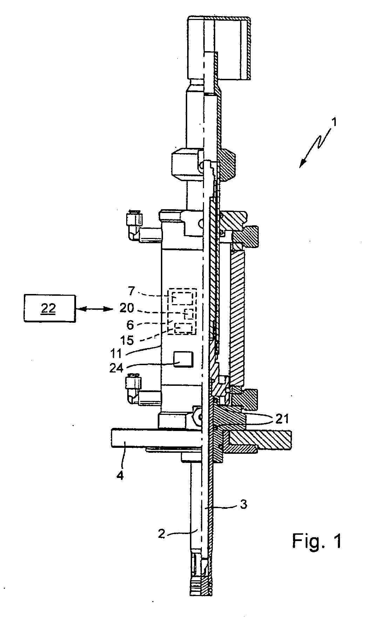

Fig. 1 zeigt eine teilweise im Längsschnitt dargestellte Ausgestaltung der erfindungsgemäßen Wechselarmatur 1. Die Wechselarmatur 1 wird über den Flansch 4 an einem in Fig. 1 nicht gesondert dargestellten Behälter befestigt, in dem sich das zu überwachende Medium befindet. Der Sensor 3 ist in einer rohrförmigen Halterung, der sog. Sensorhalterung 2 positioniert. Die Sensorhalterung 2 dient zum Schutz des relativ empfindlichen Sensors 3 in Kontakt mit dem Medium. Bei dem Sensor 2 handelt es sich beispielsweise um eine pH-Elektrode. Dargestellt ist in Fig. 1 die Wechselarmatur 1 in Messposition, wenn der Sensor 3 also in Kontakt mit dem Medium ist. Die Wechselarmatur 1 ist so ausgestaltet, daß der Sensor 3 zwischen der Messposition und der Wartungsposition automatisch hin- und herbewegt wird. In der Wartungs- oder Serviceposition wird der Sensor 3 z.B. kalibriert und/oder gereinigt. Die Wechselarmatur 1 wird über eine bekannte pneumatische Betätigungseinheit 22 gesteuert.

Zum Bewegen des Sensors 3 wird bevorzugt eine pneumatische Betätigungs-einheit 22 eingesetzt. Ohne die Anwendung geeigneter Schutzmaßnahmen besteht die Gefahr, daß sich an der Sensorhalterung 2 Ablagerungen bilden, die im Extremfall dazu führen, dass sich die Sensorhalterung 2 nicht mehr in der Wechselarmatur 1 bewegen lässt. Ablagerungen an den beweglichen Teilen beeinträchtigen die Funktionstüchtigkeit der Wechselarmatur 1 oder setzen sie im schlimmsten Fall völlig außer Kraft. Insbesondere beim Einsatz der Wechselarmatur 1 und des Sensors 3 in stark verschmutzenden Medien ist ein regelmäßiges Reinigen des Sensors 3 unbedingt erforderlich.

Derartige Ablagerungen an den bewegten Teilen lassen sich beispielsweise indirekt und frühzeitig über eine schleichende Verlängerung der Zeitdauer ermitteln, die es zum Verfahren der Sensorhalterung 2 von einer Position in die andere braucht. Um hier eine hohe Sicherheit zu haben, schlägt eine Ausgestaltung der erfindungsgemäßen Wechselarmatur 1 vor, dass der Druck in einer Zuführleitung 18a, 18b zur pneumatischen Betätigungseinheit 22 berücksichtigt wird. Bevorzugt wird mittels eines Zeitgebers 20 bzw. Timers die Zeit überwacht, die es braucht, um den Sensor 3 von einer Position in die andere Position zu verfahren. Der Timer 20 ist ebenso wie die Speichereinheit 15 in der Vorortelektronik 6 angeordnet. Überschreitet die Zeitdauer zwischen der Initiierung einer Hubbewegung und dem Erreichen der Endposition eine vorgegebene Zeitdauer, so wird auf dem Display 7 eine Warnmeldung angezeigt. Alternativ oder additiv kann die Warnmeldung über eine Funkschnittschnelle an eine übergeordnete Leitstelle geleitet werden.

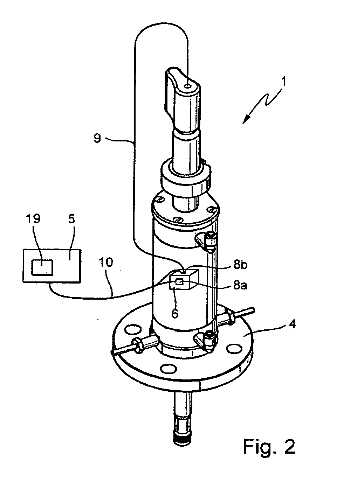

Fig. 2 zeigt eine perspektivische Ansicht der der erfindungsgemäßen Wechselarmatur 1. Wiederum ist die erfindungsgemäße Wechselarmatur 1 mit der Vorortelektronik 6 ausgestattet. Die Wechselarmatur 1 weist einen Stecker bzw. eine Steckverbindung 8a auf, ähnlich den Steckern, wie sie heute im Zusammenhang mit der MEMOSENS-Technologie bereits im Einsatz sind. Über diesen Stecker 8a und die Verbindungsleitung 10 ist die Vorortelektronik 6 mit dem Messumformer 5 verbunden. In dem Messumformer 5 ist die Regel-/Auswerteeinheit 19 angeordnet Der Stecker 8a ist im gezeigten Fall so ausgestaltet, dass der Datentransfer und die Energieversorgung für die Vorortelektronik 6 induktiv entsprechend der bekannten MEMOSENS-Technologie erfolgen. Von der Vorortelektronik 6 geht im gezeigten Fall eine kontaktlose Steckerkopplung 8b über die Verbindungsleitung 9 weiter zur Sensorelektronik 23. Es versteht sich von selbst, dass alternativ zu der kontaktlosen Steckerkopplung 8a; 8b auch eine elektrische Kontaktierung über Steckkontakte erfolgen kann.

Diese zuvor beschriebene Ausgestaltung ist insofern vorteilhaft, als hier nur eine Verbindungsleitung 10 von dem Messumformer 5 zur Wechselarmatur 1 bereitgestellt werden muss. Die üblicherweise notwendige Verbindungsleitung zwischen Messumformer 5 und Sensorelektronik 23 kann eingespart werden. Selbstverständlich kann die eine Verbindungsleitung vom Messumformer 5 auch zur Sensorelektronik 23 verlegt sein.

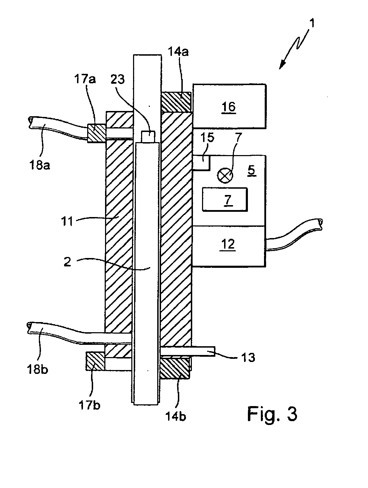

In Fig. 3 ist eine schematische Darstellung der Wechselarmatur 1 zu sehen. Die Wechselarmatur 1 ist so optimiert, dass sie durch Überwachung unterschiedlicher Zustands-größen im System, am Sensor 3 oder im Prozess eine vorausschauende Wartung ermöglicht. Bei den Zustandsgrößen des Systems - also der Wechselarmatur 1 - handelt es sich beispielsweise um die Anzahl der Hubbewegungen, durch die der Sensor 3 von der Mess- in die Wartungs-position verfahren wird. Die Hubbewegungen werden über die beiden Endlagenschalter 14a, 14b erfasst.

Information über die Zustandsgröße Temperatur in der Wechselarmatur 1 liefert der Temperatursensor 13. Information über den Druck in der Zuführleitung 18a der pneumatischen Betätigungseinheit wird über den Drucksensor 17a bereitgestellt. Der Prozessdruck wird über den Drucksensor 17b erfasst.

Die aktuell ermittelten Zustandsgrößen werden von der Vorortelektronik 6 mit vorgegebenen Sollwerten verglichen. Alternativ oder additiv werden die ermittelten Zustandsgrößen in der Speichereinheit 15 z.B. als Historiendaten abgespeichert. Wird beispielsweise eine vorgegebene Anzahl von Hubbewegungen erreicht, so wird eine Warnmeldung auf dem / Display 7 zur Anzeige gebracht, oder die Warnmeldung wird über die Verbindungsleitung 10 an den Messumformer 5 weitergeleitet und dort in geeigneter Weise ausgegeben. Die Warnmeldung vermittelt dem Bedienpersonal den Hinweis, dass die Dichtringe 21 an der Wechselarmatur 1 ausgewechselt werden müssen. Ist darüber hinaus der Temperatureinfluss auf die Verschleißkomponenten der Wechselarmatur 1 bekannt, so kann eine Prognose ausgegeben werden, zu welchem Zeitpunkt voraussichtlich der nächste Austausch der Dichtringe 21 stattfinden muss.

Die in Fig. 3 gezeigte Ausgestaltung ist mit einer internen Energieerzeugungseinheit 12 zum Betreiben der Vorortelektronik 6 ausgestattet. Die Vorortelektronik 6 ist als separates Elektronikmodul 6 mit einem Display 7 ausgestaltet. Das Elektronikmodul 6 kann an die Wechselarmatur 1 auch nachträglich adaptiert werden. Bei der Energieerzeugungseinheit handelt es sich übrigens um einen Druck/Stromwandler 12, der bevorzugt in eine Zuführleitung 18a, 1b der pneumatischen Betätigungseinheit 22 eingebaut ist.

### Bezugszeichenliste

- 1: Wechselarmatur
- 2: Sensorhalterung / rohrförmige Halterung
- 3: Sensor
- 4: Flansch
- 5: Messumformer
- 6: Vorortelektronik / Elektronikmodul / Elektronikbox
- 7: Display / Anzeigeeinheit
- 8a: Stecker / Schnittstelle
- 8b: Stecker / Schnittstelle
- 9: Verbindungsleitung
- 10: Verbindungsleitung
- 11: Gehäuse
- 12: Druck-/Stromwandler
- 13: Temperaturfühler
- 14a: Endlagenschalter
- 14b: Endlagenschalter
- 15: Speichereinheit
- 16: Detektor
- 17a: Drucksensor
- 17b: Drucksensor
- 18a: Zuführleitung
- 18b: Zuführleitung
- 19: Regel-/Auswerteeinheit
- 20: Timer / Zeitgeber
- 21: Dichtring
- 22: pneumatische Betätigungseinheit
- 23: Sensorelektronik
- 24: RF/ID-Tag

## Patentansprüche

1. Wechselarmatur (1) mit einem Armaturengehäuse (11) und mit einer in dem Armaturengehäuse (11) über eine Hubbewegung linear zwischen einer ersten Position und einer zweiten Position geführten rohrförmigen Halterung (2) für einen Sensor (3), wobei der Sensor (3) eine physikalische und/oder chemische Prozessgröße in einem Prozess bestimmt,
wobeieine Vorortelektronik (6) vorgesehen ist, die Information über zumindest eine weitere Zustandsvariable der Wechselarmatur (1), des Prozesses und/oder des Sensors (3) als Istwert bzw. als Istwerte ermittelt, und
dass der Vorortelektronik (6) eine Speichereinheit (15) zugeordnet ist, in der der ermittelte Istwert bzw. die ermittelten Istwerte abgespeichert ist / sind und/ oder vorgegebene Sollwerte abgespeichert sind,
**dadurch gekennzeichnet, dass** an der Wechselarmatur (1) zumindest ein Detektor (14a, 14b) vorgesehen ist, der eine Hubbewegung der rohrförmigen Halterung (2) in der Wechselarmatur (1) detektiert, und
dass eine Regel-/Auswerteeinheit (19) die Anzahl der erfolgten Hubbewegungen als Istwert bereitstellt und/oder eine Warnmeldung generiert, wenn die Anzahl der Hubbewegungen eine als Sollwert vorgegebene Anzahl von Hubbewegungen erreicht.

2. Vorrichtung nach Anspruch 1,
**dadurch gekennzeichnet,**
**dass** die Vorortelektronik (6) in einem Elektronikmodul bzw. in einer Elektronikbox angeordnet ist, und
**dass** das Elektronikmodul bzw. die Elektronikbox in die Wechselarmatur (1) integriert ist oder
**dass** die Wechselarmatur (1) mit dem Elektronikmodul (6) bzw. mit der Elektronikbox nachrüstbar ist.

3. Vorrichtung nach Anspruch 2,
**dadurch gekennzeichnet,**
**dass** an der Vorortelektronik (6) zumindest eine Schnittstelle (8a, 8b) bzw. eine Steckverbindung vorgesehen ist, über die die Vorortelektronik (6) mit einem entfernten Messumformer (5) des Sensors (3) Information austauscht und/oder über die die Vorortelektronik (6) mit Energie versorgt wird und/oder über die die Vorortelektronik (6) mit einer dem Sensor (3) zugeordneten Sensorelektronik (23) Information und/oder Energie austauscht.

4. Vorrichtung nach Anspruch 1,
**dadurch gekennzeichnet,**
**dass** es sich bei den Detektoren um zwei Endlagenschalter (14a, 14b) handelt, die das Erreichen der ersten Position und der zweiten Position der rohrförmigen Halterung (2) detektieren.

5. Vorrichtung nach Anspruch 1,
**dadurch gekennzeichnet,**
**dass** zumindest ein Temperaturfühler (13) vorgesehen ist, der die Temperatur der Wechselarmatur (1) und/oder des Prozesses ermittelt, und
**dass** die Regel-/Auswerteeinheit (19) den maximal gemessenen Temperatur-wert und/oder die Zeitdauer, während der die Temperatur über einen vorgegebenen Schwellenwert liegt, in der Speichereinheit (15) abspeichert.

6. Vorrichtung nach Anspruch 4 oder 5,
**dadurch gekennzeichnet,**
**dass** eine Anzeigevorrichtung (7) vorgesehen ist, auf der der Istwert der Anzahl der Hubbewegungen und/oder ein Hinweis zum Austausch einer Verschleisskomponente (21) der Wechselarmatur (1) zur Anzeige kommt, wenn die Anzahl der Hubbewegungen einen vorgegebenen Sollwert erreicht, wobei der Sollwert der Hubbewegungen ggf. von der Temperatur abhängig ist.

7. Vorrichtung nach Anspruch 1,
**dadurch gekennzeichnet,**
**dass** eine pneumatische Betätigungseinheit (22) vorgesehen ist, über die die rohrförmige Halterung (2) in der Wechselarmatur (1) zwischen der ersten Position und der zweiten Position bzw. zwischen der zweiten und der ersten Position verfahrbar ist.

8. Vorrichtung nach Anspruch 7,
**dadurch gekennzeichnet,**
**dass** ein Timer (20) vorgesehen ist, der die Zeitdauer ermittelt, die die rohrförmige Halterung (2) zum Zurücklegen der Strecke zwischen der ersten Position und der zweiten Position benötigt,
**dass** in der Speichereinheit (15) die Zeit als Sollwert abgespeichert ist, die die Wechselarmatur zum Verfahren des Sensors (3) von der ersten Position in die zweite Position bei korrektem Funktionieren der Wechselarmatur (1) braucht, und
**dass** die Regel-/Auswerteeinheit (19) eine Warnmeldung generiert, wenn die vorgegebene Zeitdauer erreicht oder überschritten wird.

9. Vorrichtung nach Anspruch 8,
**dadurch gekennzeichnet,**
**dass** ein erster Drucksensor (17a) vorgesehen ist, der den Druck in einer Zuleitung (18a, 18b) der pneumatischen Betätigungseinheit (22) detektiert,
und/oder
**dass** ein zweiter Drucksensor (17b) vorgesehen ist, der den Druck im Prozess ermittelt, und
**dass** die Regel-/Auswerteeinheit (19) die als Sollwert vorgegebene Zeit im Hinblick auf den in der Zuleitung (18a, 18b) und/oder im Prozess gemessenen Druck korrigiert.

10. Vorrichtung nach Anspruch 7 oder 9,
**dadurch gekennzeichnet,**
**dass** in einer Zuführleitung (18a, 18b) der pneumatischen Betätigungseinheit (22) ein Druck-/Stromwandler (12) vorgesehen ist, der die Vorortelektronik (6) und/oder die Sensorelektronik (23) mit Energie versorgt.

11. Vorrichtung nach Anspruch 1,
**dadurch gekennzeichnet,**
**dass** in der Speichereinheit (15) der Vorortelektronik (6) Identifikationsdaten und/oder Servicemaßnahmen gespeichert sind.

12. Vorrichtung nach Anspruch 1 oder 11,
**dadurch gekennzeichnet,**
**dass** der Wechselarmatur (1) ein RF/ID-Tag (24) zugeordnet ist.

## Claims

1. Retractable assembly (1) with an assembly housing (11) and with a tubular holder (2) for a sensor (3), said holder being guided linearly in the assembly housing (11) via a stroke movement between a first position and a second position, wherein said sensor (3) determines a physical and/or chemical process variable in a process,
wherein a local electronics system (6) is provided and provides information about at least one additional status variable of the retractable assembly (1), the process and/or the sensor as an actual value or actual values, and wherein a memory unit (15) is assigned to the local electronics system (6), said memory unit being used to store the determined actual value or actual values and/or predefined setpoint values,
**characterized in that** at least one detector (14a, 14b) is provided on the retractable assembly (1), said detector detecting a stroke movement of the tubular holder (2) in the retractable assembly (1), and
**in that** a control/evaluation unit (19) provides as an actual value the number of stroke movements that occur and/or generates a warning message if the number of stroke movements reaches a number of stroke movements that is predefined as the setpoint.

2. Unit as claimed in Claim 1,
**characterized in that**
the local electronics system (6) is arranged in an electronics module or in an electronics box, and **in that** the electronics module or the electronics box is integrated into the retractable assembly (1)
or **in that** the retractable assembly (1) can be retrofitted with the electronics module (6) or with the electronics box.

3. Unit as claimed in Claim 2,
**characterized in that**
at least one interface (8a, 8b) or a plug-in connection is provided on the local electronics system (6), via which the local electronics system (6) exchanges information with a remote transmitter (5) of the sensor (3) and/or via which the local electronics system (6) receives energy and/or via which the local electronics system (6) exchanges information and/or energy with sensor electronics system (23) assigned to the sensor.

4. Unit as claimed in Claim 1,
**characterized in that**
the detectors are two limit position switches (14a, 14b) that detect when the first position and the second position of the tubular holder (2) are reached.

5. Unit as claimed in Claim 1,
**characterized in that**
at least one temperature sensor (13) is provided that determines the temperature of the retractable assembly (1) and/or of the process, and **in that** the control/evaluation unit (19) saves the maximum measured temperature value, and/or the length of time during which the temperature is over a predefined threshold value, in the memory unit (15).

6. Unit as claimed in Claim 4 or 5,
**characterized in that**
a display unit (7) is provided and displays the actual value of the number of stroke movements and/or information to replace a wear component (21) of the retractable assembly (1) if the number of stroke movements reaches a predefined setpoint, wherein the stroke movement setpoint depends on the temperature in certain circumstances.

7. Unit as claimed in Claim 1,
**characterized in that**
a pneumatic actuator unit (22) is provided via which the tubular holder (2) in the retractable assembly (1) can be moved between the first position and the second position or between the second position and the first position.

8. Unit as claimed in Claim 7,
**characterized in that**
a timer (20) is provided that determines the time the tubular holder (2) requires to travel the path between the first position and the second position,
the time that the retractable assembly needs to move the sensor (3) from the first position to the second position when the retractable assembly (1) is functioning correctly is saved as a setpoint in the memory unit (15)
and
the control/evaluation unit (19) generates a warning message if the predefined time is reached or exceeded.

9. Unit as claimed in Claim 8,
**characterized in that**
a first pressure sensor (17a) is provided that detects the pressure in a supply line (18a, 18b) of the pneumatic actuator unit (22), and/or
a second pressure sensor (17b) is provided that determines the pressure in the process, and the control/evaluation unit (19) corrects the time specified as the setpoint in view of the pressure measured in the supply line (18a, 18b) and/or in the process.

10. Unit as claimed in Claim 7 or 9,
**characterized in that**
a pressure/current converter (12) is provided in a supply line (18a, 18b) of the pneumatic actuator unit (22), said pressure/current converter providing energy to the local electronics system (6) and/or sensor electronics system (23).

11. Unit as claimed in Claim 1,
**characterized in that**
identification data and/or service measures are stored in the memory unit (15) of the local electronics system (6).

12. Unit as claimed in Claim 1 or 11,
**characterized in that**
an RF/ID tag (24) is assigned to the retractable assembly (1).

## Revendications

1. Sonde rétractable (1) avec un boîtier de sonde (11) et avec un support tubulaire (2) guidé de façon linéaire par le biais d'un mouvement de levage entre une première position et une deuxième position, lequel support est destiné à un capteur (3), le capteur (3) déterminant une grandeur physique et/ou chimique au sein d'un process,
une électronique locale (6) étant prévue, laquelle détermine une information par l'intermédiaire d'au moins une variable d'état supplémentaire de la sonde rétractable (1), du process et/ou du capteur (3) en tant que valeur réelle ou en tant que valeurs réelles, et une unité de mémoire (15) étant attribuée à l'électronique locale (6), unité dans laquelle la valeur réelle déterminée ou les valeurs réelles déterminées est/sont enregistrée(s) et/ou les valeurs de consigne prédéfinies sont enregistrées,
**caractérisée en ce qu'**est prévue sur la sonde rétractable (1) au moins un détecteur (14a, 14b), qui détecte un mouvement de levage du support tubulaire (2) dans la sonde rétractable (1), et **en ce qu'**une unité de régulation / d'exploitation (19) met à disposition en tant que valeur réelle le nombre de mouvements de levage effectués et/ou génère un message d'avertissement lorsque le nombre de mouvements de levage atteint un nombre de mouvements de levage prédéfini en tant que valeur de consigne.

2. Dispositif selon la revendication 1,
**caractérisé en ce**
**que** l'électronique locale (6) est disposée dans un module électronique ou dans un boîtier électronique, et
en ce que le module électronique ou le boîtier électronique est intégré dans la sonde rétractable (1) ou
en ce que la sonde rétractable (1) peut être post-équipée du module électronique (6) ou du boîtier électronique.

3. Dispositif selon la revendication 2,
**caractérisé en ce**
**qu'**est prévue, sur l'électronique locale (6), au moins une interface (8a, 8b) ou une connexion enfichable, par l'intermédiaire de laquelle l'électronique locale (6) échange des informations avec un transmetteur de mesure (5) déporté du capteur (3) et/ou par l'intermédiaire de laquelle l'électronique locale (6) est alimentée en énergie (6) et/ou par l'intermédiaire de laquelle l'électronique locale (6) échange des informations et/ou de l'énergie avec une électronique de capteur (23) attribuée au capteur (3).

4. Dispositif selon la revendication 1,
**caractérisé en ce**
**que**, concernant les détecteurs, il s'agit de deux interrupteurs de fin de course (14a, 14b), qui détectent l'atteinte de la première position et de la deuxième position du support tubulaire (2).

5. Dispositif selon la revendication 1,
**caractérisé en ce**
**qu'**est prévue une sonde de température (13), qui détermine la température de la sonde rétractable (1) et/ou du process, et en ce que l'unité de régulation / d'exploitation (19) enregistre dans l'unité de mémoire (15) la valeur de température maximale mesurée et/ou la durée, pendant laquelle la température est supérieure à un seuil prédéfini.

6. Dispositif selon la revendication 4 ou 5,
**caractérisé en ce**
**qu'**est prévu un dispositif d'affichage (7), sur lequel est affichée la valeur réelle du nombre de mouvements de levage et/ou un message relatif au remplacement d'un composant d'usure (21) de la sonde rétractable (1) lorsque le nombre de mouvements de levage atteint un seuil prédéfini, la valeur de consigne des mouvements de levage dépendant le cas échéant de la température.

7. Dispositif selon la revendication 1,
**caractérisé en ce**
**qu'**est prévue une unité d'actionnement pneumatique (22), par l'intermédiaire de laquelle le support tubulaire (2) peut être déplacé dans la sonde rétractable (1) entre la première position et la deuxième position, ou entre la deuxième position et la première position.

8. Dispositif selon la revendication 7,
**caractérisé en ce**
**qu'**est prévu un temporisateur (20), qui détermine la durée requise par le support tubulaire (2) pour parcourir la distance entre la première position et la deuxième position, en ce que la durée est enregistrée dans l'unité de mémoire (15) en tant que valeur de consigne, durée requise par la sonde rétractable pour déplacer le capteur (3) de la première position vers la deuxième position en cas de fonctionnement correct de la sonde rétractable (1),
et
en ce que l'unité de régulation / d'exploitation génère un message d'avertissement lorsque la durée prédéfinie est atteinte ou dépassée.

9. Dispositif selon la revendication 8,
**caractérisé en ce**
**qu'**est prévu un premier capteur de pression (17a), qui détecte la pression dans une conduite d'alimentation (18a, 18b) de l'unité d'actionnement pneumatique (22), et/ou
en ce qu'est prévu un deuxième capteur de pression (17b), qui détermine la pression dans le process, et
en ce que l'unité de régulation / d'exploitation (19) corrige la durée prédéfinie en tant que valeur de consigne en fonction de la pression mesurée dans la conduite d'alimentation (18a, 18b) et/ou dans le process.

10. Dispositif selon la revendication 7 ou 9,
**caractérisé en ce**
**qu'**est prévu, dans une conduite d'alimentation (18a, 18b) de l'unité d'actionnement pneumatique (22) un convertisseur de pression / courant (12), qui alimente en énergie l'électronique locale (6) et/ou l'électronique de capteur (23).

11. Dispositif selon la revendication 1,
**caractérisé en ce**
**que** dans l'unité de mémoire (15) de l'électronique locale (6) sont enregistrées les données d'identification et/ou les mesures de service.

12. Dispositif selon la revendication 1 ou 11,
**caractérisé en ce**
**qu'**un tag RF/ID (24) est attribué à la sonde rétractable (1).
